# EUROPÄISCHE PATENTSCHRIFT

(11) **EP 3 325 568 B1**
(45) Veröffentlichungstag und Bekanntmachung des Hinweises auf die Patenterteilung: **14.10.2020**
(21) Anmeldenummer: 16738779.4
(22) Anmeldetag: 13.07.2016
(51) Int. Cl.: C09J 7/21, D03D 1/00, D03D 13/00, D03D 15/00

(54) **VORRICHTUNG ZUR HERSTELLUNG EINES HANDREISSBAREN TEXTILEN KLEBEBANDES SOWIE ZUGEHÖRIGES KLEBEBAND**
DEVICE FOR PRODUCING A MANUALLY TEARABLE TEXTILE ADHESIVE TAPE, AND ASSOCIATED ADHESIVE TAPE
DISPOSITIF POUR LA FABRICATION D'UN RUBAN ADHÉSIF TEXTILE POUVANT ÊTRE DÉCHIRÉ À LA MAIN AINSI QUE RUBAN ADHÉSIF ASSOCIÉ

(30) Priorität: 20.07.2015 DE 202015103809 U
(43) Veröffentlichungstag der Anmeldung: 30.05.2018
(73) Patentinhaber: certoplast Technische Klebebänder GmbH, 42285 Wuppertal (DE)
(72) Erfinder: LEERMANN, Timo, 42369 Wuppertal (DE); RAMBUSCH, Peter, 42115 Wuppertal (DE); RAMBUSCH, René, 42113 Wuppertal (DE)
(74) Vertreter: Andrejewski - Honke Patent- und Rechtsanwälte Partnerschaft mbB
(86) Internationale Anmeldenummer: PCT/EP2016/066678
(87) Internationale Veröffentlichungsnummer: WO 2017/012957

(56) Entgegenhaltungen:
- EP-A1- 1 498 525
- EP-A1- 2 322 385
- EP-A2- 2 166 141
- WO-A1-2013/102649
- DE-B4-102005 044 942
- GB-A- 653 529
- US-A- 4 121 626

## Beschreibung

Die Erfindung betrifft ein handeinreißbares textiles Klebeband, mit einem zumindest einseitig mit einem Kleber beschichteten gewebten Trägerband, wobei das Trägerband aus Längsfäden und Querfäden aufgebaut ist.

Handeinreißbare textile Klebebänder werden auf verschiedene Art und Weise hergestellt und produziert. Ihr Einsatzgebiet liegt dabei regelmäßig im Automobilbereich, und zwar zum Umwickeln von Kabelbündeln in Automobilen. Mit Hilfe der Handeinreißbarkeit wird sichergestellt, dass ein Montagewerker ohne zusätzliche Hilfsmittel wie beispielsweise Scheren oder Messer das betreffende Klebeband von einer zugehörigen Klebebandrolle abwickeln und problemlos von Hand in gewünschter Länge einreißen kann. Das geschieht meistens quer zur Längserstreckung. Im Anschluss daran wickelt dann der Montagewerker den solchermaßen hergestellten Klebebandabschnitt um die zu fixierenden Kabel.

Um die Handeinreißbarkeit einstellen zu können, sind im Stand der Technik verschiedene Vorgehensweisen bekannt. So greift die EP 2 050 802 B1 ein Mischgewebe auf, welches in Kettrichtung mit Polyesterfasern bzw. Polyesterfäden arbeitet und in Schussrichtung auf Baumwollfäden zurückgreift. Dadurch soll sich das bekannte Klebeband besonders einfach in Querrichtung einreißen lassen.

Im Rahmen der DE 10 2005 044 942 B4 wird so vorgegangen, dass das textile Trägerband zur Herstellung des handeinreißbaren textilen Klebebandes im Falle von Polyester mit Lauge oder bei Rückgriff auf Polyamid mit Säure behandelt wird. Auf diese Weise wird die gewünschte reduzierte Faserreißfestigkeit des Trägermaterials zur Verfügung gestellt. Allerdings wird das gesamte Trägerband bzw. das gesamte Gewebe mit der fraglichen Lauge oder Säure behandelt, so dass zwar die gewünschte reduzierte Festigkeit beobachtet wird, dies allerdings zugleich mit einer zwangsläufig verbundenen verringerten Abriebfestigkeit einhergeht.

Im Rahmen der WO 2013/0102649 A1 wird eine Weiterentwicklung der Lehre nach der DE 10 2005 044 942 B4 beschrieben. An dieser Stelle erfolgt nämlich die Behandlung mit Säure oder Lauge als Bearbeitungsflüssigkeit so lange, bis die Reißfestigkeit des textilen gewebten Trägerbandes weniger als 100N/cm beträgt. Hierbei geht die bekannte Lehre davon aus, dass bei Gewebeträgerbändern eine Reißfestigkeit von weniger als 100N/cm insbesondere in Längsrichtung, also Kettrichtung des Gewebeträgerbandes, als handeinreißbar qualifiziert werden kann.

Tatsächlich liefert beispielsweise der Stand der Technik nach der DE 20 2007 006 816 U1 entsprechende Kriterien, dass bei einer solchen Auslegung der fragliche Gewebeträger insgesamt als handeinreißbar qualifiziert werden kann. Wie im Falle der DE 10 2005 044 942 B4 erfolgt jedoch auch bei der WO 2013/102649 A1 eine Behandlung des gesamten Gewebeträgers, so dass erneut mit der Reduzierung der Reißfestigkeit eine Verringerung der Abriebfestigkeit einhergeht.

Klebebänder, die im Regelfall als Wickelbänder zum Ummanteln von langgestreckten Objekten und insbesondere von Kabelbäumen in Automobilen eingesetzt werden, müssen jedoch nicht nur handeinreißbar sein und den herrschenden Umweltbedingungen widerstehen. Hierbei handelt es sich oftmals um erhöhte Temperaturen im Motorraum von bis zum 100°C und mehr, sondern auch um Benzin, Öl, Kühlwasser etc., welche dem fraglichen Klebeband nichts anhaben dürfen bzw. dessen Funktion nicht schädigen dürfen. Außerdem werden zunehmend erhöhte Anforderungen an die Abriebfestigkeit solcher Klebebänder gestellt.

Das lässt sich darauf zurückführen, dass Kabelbäume bei modernen Automobilen eine erhebliche Länge und ein zunehmendes Gewicht aufweisen und praktisch in sämtliche Winkel des Automobils verlegt werden. Dadurch kommt es zwangsläufig zu einem unter Umständen scheuernden Kontakt mit Karosserieteilen, Motorteilen etc. Damit bei diesem ggf. scheuernden Kontakt das Klebeband insgesamt seine Funktion behält und nicht aufgescheuert wird, werden zunehmend erhöhte Anforderungen an die Abriebfestigkeit gestellt.

Die Abriebfestigkeit bzw. Abriebbeständigkeit wird im Stand der Technik üblicherweise anhand von Normwerken der Automobilindustrie wie der Liefernorm LV312 "Klebebänder für Kabelsätze in Kraftfahrzeugen" (1/2005) bestimmt und definiert. Verwiesen wird diesbezüglich auf die DE 20 2007 006 816 U1 mit weiteren Nachweisen.

Der bisherige Stand der Technik ist zwar in der Lage, insbesondere bei einem Gewebeträgerband auf Basis von Polyesterfäden die erforderliche Handeinreißbarkeit zur Verfügung zu stellen. Dies wird durch die Behandlung mit der zuvor bereits beschriebenen Bearbeitungsflüssigkeit, konkret mit Lauge oder Säure erreicht. Allerdings führt dies zwangsläufig auch zu einer verminderten Abriebbeständigkeit des fraglichen Trägerbandes, weil die einzelnen Fäden hinsichtlich ihrer Faserreißfestigkeit gezielt geschädigt worden sind. Eine Abnahme der Abriebbeständigkeit ist jedoch aus den zuvor geschilderten Gründen nachteilig.

Ein handeinreißbares textiles Klebeband des zuvor geschilderten Aufbaus wird in der EP 2 322 385 A1 beschrieben. Dort geht es darum, sowohl eine gute Handeinreißbarkeit zu erreichen als auch eine hohe Abriebbeständigkeit zumindest gemäß den Klassen C oder D nach LV312. Zu diesem Zweck setzt sich der Gewebeträger aus Kettfäden und Schussfäden zusammen, wobei die Fadenstärke der Schussfäden größer als die Fadenstärke der Kettfäden ausgelegt ist. Es wird also von vornherein mit unterschiedlich gestalteten Kett- und Schussfäden gearbeitet. Hier setzt die Erfindung ein.

Der Erfindung liegt das technische Problem zugrunde, ein handeinreißbares textiles Klebeband und eine zugehörige Vorrichtung zu ihrer Herstellung anzugeben, welche den Anforderungen an den Einsatz insbesondere als Wickelband zur Ummantelung von Kabeln in Automobilen genügen, zugleich die erforderliche Handeinreißbarkeit aufweisen und gegenüber bisherigen Ausführungsformen abriebbeständiger ausgelegt sind.

Zur Lösung dieser technischen Problemstellung ist Gegenstand der Erfindung ein handeinreißbares textiles Klebeband nach Anspruch 1 und eine zugehörige Vorrichtung gemäß Anspruch 6.

Tatsächlich wird im Rahmen der Erfindung so vorgegangen, dass zunächst einmal nicht das gesamte Trägerband bzw. Gewebeträgerband mit einer Bearbeitungsflüssigkeit behandelt wird, wie dies die DE 10 2005 044 942 B4 und die Weiterentwicklung entsprechend der WO 2013/102649 A1 verfolgen. Vielmehr erfolgt im Rahmen der Erfindung lediglich die Behandlung einzelner Fäden in einer Behandlungsvorrichtung mit der fraglichen Bearbeitungsflüssigkeit. Die Fäden werden dabei ausgehend von einer Vorratseinheit für Längs- und/oder Querfäden der fraglichen Behandlungsvorrichtung im Anschluss zugeführt. In der Behandlungsvorrichtung werden die von der Vorratseinheit zugeführten Fäden mit einer die Fasern des jeweiligen Fadens angreifenden Bearbeitungsflüssigkeit so lange behandelt, bis ihre Reißfestigkeit um 5 % bis 60 % im Vergleich zum unbehandelten Faden verringert ist.

Die zuvor angegebene relative Verringerung der Reißfestigkeit ergibt sich aus einem Vergleich der Reißfestigkeit des unbehandelten Fadens vor dem Passieren der Behandlungsvorrichtung im Vergleich zur Reißfestigkeit des Fadens nach Passieren der Behandlungsvorrichtung. Die Reißfestigkeit wird dabei entsprechend der DIN EN 14 410 bestimmt. Ergänzend sei auf die DE 20 2013 102 969 U1 Bezug genommen, welche die einschlägigen Normen zur Charakterisierung von Klebebänder in diesem Zusammenhang aufzählt und zusammenfasst. Jedenfalls zeichnen sich die behandelten Fäden im Vergleich zu den unbehandelten Fäden durch die um 5 % bis 60 % verringerte Reißfestigkeit aus.

Bei der Bearbeitungsflüssigkeit handelt es sich im Falle von Polyesterfäden um eine Lauge und insbesondere Natronlauge. Kommen dagegen Fäden aus Polyamid zum Einsatz, so wird typischerweise mit einer Säure als Bearbeitungsflüssigkeit gearbeitet. Als Säure hat sich Ameisensäure für Polyamidfäden als geeignet erwiesen.

Die Erfindung greift im Allgemeinen auf Polyesterfäden als Längs- und Querfäden zurück, weil aus den Polyesterfäden hergestellte Polyestergewebe für den beschriebenen Einsatzzweck besonders geeignet sind. Tatsächlich zeichnen sich Polyestergewebe durch eine hohe Abriebbeständigkeit, eine reißfeste Auslegung und signifikante Temperaturstabilität aus, so dass solche Polyestergewebe für den Einsatzzweck als Wickelband zum Umwickeln von Kabeln in Automobilen prädestiniert sind.

Allerdings lassen sich Polyestergewebe im Regelfall nicht per Fland einreißen. Um dennoch die geforderte Flandeinreißbarkeit zu gewährleisten, werden im Rahmen der Erfindung einzelne der Längs- und/oder Querfäden des hieraus hergestellten Gewebes und folglich des Gewebeträgerbandes mit der Bearbeitungsflüssigkeit so lange behandelt, bis die Reißfestigkeit wie beschrieben verringert ist. Bei den einzelnen Längs- oder Querfäden kann es sich grundsätzlich sowohl um Längsfäden als auch Querfäden handeln.

Grundsätzlich kommt die Erfindung auch dann zum Einsatz oder kann angewandt werden, wenn ein aus unbehandelten Längs- und Querfäden aufgebaute Polyestergewebe bereits per Hand einreißbar ist. In diesem Fall sorgt die zusätzliche Behandlung einzelner Fäden und das dann daraus hergestellte Gewebe dafür, dass die Handeinreißbarkeit mit verringerten Kräften einhergeht, beispielsweise dazu korrespondiert, dass die Reißfestigkeit des textilen gewebten Trägerbandes deutlich weniger als 100 N/cm beträgt und beispielsweise bei 50 N/cm oder 60 N/cm liegt. Jedenfalls gelingt es im Rahmen der Erfindung, das gewebte Trägerband an die tatsächlichen Erfordernisse, insbesondere im Hinblick auf die Handeinreißbarkeit anzupassen. Hierzu werden einzelne Fäden behandelt und mit unbehandelten Fäden zu dem fraglichen Trägerband verwebt.

Im Regelfall geht die Erfindung so vor, dass sämtliche Längsfäden des anschließend hergestellten Gewebes der fraglichen Behandlung mit der Bearbeitungsflüssigkeit unterzogen werden. Demgegenüber sind die Querfäden unbehandelt bzw. liegen als unbehandelte Fäden vor, verfügen also im Vergleich zu den Längsfäden nicht über eine verringerte Reißfestigkeit. Dadurch lässt sich das auf diese Weise hergestellte Gewebe und insbesondere das Trägerband einerseits besonders einfach per Hand in Querrichtung einreißen, weil die für die Reißfestigkeit in Querrichtung hauptsächlich verantwortlich zeichnenden Längsfäden hinsichtlich ihrer Reißfestigkeit entsprechend geschwächt worden sind.

Demgegenüber haben die Querfäden andererseits keine Schwächung erfahren. Als Folge hiervon besitzt das solchermaßen hergestellte Gewebe und folglich auch der daraus produzierte Gewebeträger bzw. das Gewebeträgerband eine praktisch gleiche oder allenfalls geringfügig verminderte Abriebbeständigkeit im Vergleich zu einem Polyestergewebe vergleichbaren Aufbaus, bei dem sowohl die Längs- als auch Querfäden jeweils unbehandelt sind. Die Erfindung verbindet also zum ersten Mal die besonderen Vorteile eines Gewebeträgerbandes aus Polyesterfäden mit auf einfache Weise realisierter Handeinreißbarkeit sowie Abriebbeständigkeit. Hierin sind die wesentlichen Vorteile zu sehen.

Im Rahmen der Erfindung bestehen vielfältige Möglichkeiten zur weiteren Ausgestaltung. So können beispielsweise sämtliche Längsfäden die Behandlungsvorrichtung durchlaufen und mit der Bearbeitungsflüssigkeit so lange behandelt werden, bis die gewünschte verringerte Reißfestigkeit von 5 % bis 60 % beobachtet wird. Es ist aber auch möglich, dass beispielsweise nicht sämtliche Längsfäden, sondern nur jeder zweite oder dritte Längsfaden die beschriebene Behandlung erfährt. Auch in einem solchen Fall ist (noch) die gewünschte Handeinreißbarkeit in Querrichtung gegeben. Darüber hinaus können natürlich auch die Querfäden die Behandlungsvorrichtung durchlaufen und mit der Bearbeitungsflüssigkeit so lange behandelt werden, bis ihre Reißfestigkeit die beanspruchte Verringerung von 5 % bis 60 % aufweist. In der Regel wird man jedoch die Querfäden unbehandelt lassen, um mit ihrer Hilfe eine möglichst hohe Abriebbeständigkeit des insgesamt hergestellten gewebten Trägerbandes zur Verfügung zu stellen. Tatsächlich werden vergleichbare Abriebbeständigkeiten für das erfindungsgemäß hergestellte handeinreißbare textile Klebeband beobachtet, wie sie bei einem Klebeband mit gleich aufgebautem Träger aus jeweils unbehandelten Fäden beobachtet werden.

Um die gewünschte verringerte Reißfestigkeit von 5 % bis 60 % der behandelten Fäden im Vergleich zu den unbehandelten Fäden einzustellen, wird im Allgemeinen so vorgegangen, dass der jeweils von der Vorratseinheit zugeführte Faden die Bearbeitungsflüssigkeit in einem kontinuierlichen oder diskontinuierlichen Prozess durchläuft. Im Regelfall wird kontinuierlich gearbeitet. Dann passieren die jeweils zu behandelnden Fäden kontinuierlich mit einer vorgegebenen Geschwindigkeit und meistens einfach die Behandlungsvorrichtung. Generell ist es natürlich auch möglich, die zu behandelnden Fäden mehrfach durch die Behandlungsvorrichtung hindurchzuführen und mit der Bearbeitungsflüssigkeit zu behandeln. Hierbei haben sich insgesamt Geschwindigkeiten von 20m/min und insbesondere von 30m/min als besonders günstig erwiesen. Außerdem wird man die Behandlungszeit im Regelfall auf wenigstens 4 Minuten einstellen.

Ferner werden die zu behandelnden Fäden mit einem Flottenverhältnis von ca. 1:20 und mehr durch die Behandlungsvorrichtung mit der darin befindlichen Bearbeitungsflüssigkeit hindurchgeführt. Das Flottenverhältnis drückt dabei das Verhältnis der Menge an den textilen Fäden im Vergleich zur Menge an Bearbeitungsflüssigkeit in der Behandlungsvorrichtung aus. Nach der Behandlung können die einzelnen Fäden einen Dämpfer mit Sattdampf durchlaufen. Der Sattdampf wird dabei typischerweise in einem Behandlungsraum eingestellt, welcher mit gesättigtem Wasserdampf beaufschlagt wird. Insgesamt geht die Erfindung dabei so vor, dass im Falle von Natronlauge als Bearbeitungsflüssigkeit die Konzentration typischerweise im Bereich von 10g/Liter bis 40g/Liter in der Behandlungsvorrichtung vorliegt.

Auf diese Weise lässt sich unter Berücksichtigung der zuvor bereits angegebenen Durchlaufgeschwindigkeit sowie Behandlungszeit die Reißfestigkeit des unbehandelten Fadens nach Passieren der Bearbeitungsflüssigkeit im Inneren der Behandlungsvorrichtung um wenigstens 5% verringern. Im Regelfall erfolgt sogar eine Verminderung der Reißfestigkeit von bis zu 60 %.

Wenn folglich eingangsseitig der Behandlungsvorrichtung von der Vorratseinheit zugeführte und unbehandelte (Polyester)-Fäden zugeführt werden und in der Behandlungsvorrichtung mit der dort befindlichen Natronlauge der angegebenen Konzentration sowie unter Berücksichtigung der bereits beschriebenen Behandlungszeit behandelt werden, ist damit zu rechnen, dass die fraglichen Polyesterfäden nach Passieren der Behandlungsvorrichtung hinsichtlich ihrer Reißfestigkeit verringert sind, konkret eine verringerte Reißfestigkeit um 5 % bis 60 % aufweisen.

Die solchermaßen behandelten Fäden und insbesondere Längsfäden werden nun im Anschluss an die Behandlungsvorrichtung einer Webeinheit zugeführt. In der Webeinheit werden die jeweils behandelten Fäden im Regelfall zusammen mit unbehandelten Fäden miteinander zu einem Gewebe verwebt. Aus dem Gewebe wird das jeweilige Trägerband hergestellt, in dem das Gewebe beispielweise schon jetzt in einzelne Trägerbänder geschnitten oder zunächst mit Kleber beschichtet und dann geschnitten wird. Für die Beschichtung mit dem Kleber sorgt eine abschließende Beschichtungseinheit, welche der Webeinheit folgt. Mit Hilfe der Beschichtungseinheit wird das Trägerband zumindest einseitig mit dem fraglichen Kleber beschichtet.

Bei der Herstellung des Gewebes in der Webeinheit wird im Allgemeinen so vorgegangen, dass als Längsfäden bzw. Kettfäden mit Hilfe der Bearbeitungsflüssigkeit behandelte Fäden zum Einsatz kommen, während die Quer- oder Schussfäden als unbehandelte Fäden vorliegen und verwebt werden. Grundsätzlich kann auch so gearbeitet werden, dass nur jeder zweite oder dritte Längsfaden ein behandelter Faden ist, wohingegen die dazwischen befindlichen Längsfäden ebenso wie die Querfäden unbehandelt sind. Um die gewünschte Reißfestigkeit zu erreichen und einzustellen, wird jedoch im Allgemeinen so gearbeitet, dass es sich bei sämtlichen Längsfäden bzw. Kettfäden um mit der Bearbeitungsflüssigkeit behandelte Fäden der verminderten Reißfestigkeit handelt, wohingegen die Querfäden bzw. Schussfäden unbehandelte Fäden mit demgegenüber erhöhte Reißfestigkeit darstellen. Also Folge hiervon beobachtet man die gewünschte Flandeinreißbarkeit in Kombination mit einer im Vergleich zum Stand der Technik gesteigerten Abriebbeständigkeit.

Wie bereits erläutert, handelt es sich bei der Behandlungsvorrichtung vorteilhaft um eine Alkalisierungseinheit. Die Alkalisierungseinheit ist typischerweise mit einer Natronlauge vorgegebener Konzentration gefüllt, beispielsweise mit einer Konzentration von 10g/l bis 40g/l. Außerdem verfügt die Natronlauge typischerweise über eine Temperatur von wenigstens 50 °C und mehr.

Nach Passieren der Behandlungseinrichtung können die fraglichen Fäden eine Wascheinheit passieren. Im Inneren der Wascheinheit werden die Fäden gewaschen und neutralisiert, beispielsweise mit Wasser gespült, welches über eine Sprüheinrichtung den Fäden zugeführt wird. Dadurch werden insgesamt ph-neutrale Bedingungen eingestellt und verhindert, dass beim anschließenden Webvorgang in der Webeinheit eventuell noch an den Fäden anhaftende Lauge vorhanden ist.

Bevor die zu behandelnden Fäden die Behandlungseinrichtung passieren, können sie zusätzlich einer Reinigung unterzogen werden. Zu diesem Zweck mag der Behandlungseinrichtung eine Reinigungsstation vorgeschaltet sein. In dieser Reinigungsstation werden die Fäden bei Bedarf von etwaigen Verunreinigungen wie Öl oder Fett gereinigt. Das ist allerdings nicht zwingend, zumal im Regelfall in der anschließenden Behandlungsvorrichtung ebenfalls eine Reinigung gleichsam automatisch erfolgt.

Für das solcher Maßen hergestellte Klebeband empfiehlt die Erfindung den Rückgriff auf Fäden und insbesondere Polyesterfäden, wobei das fragliche Gewebe und folglich das gewebte Trägerband vorzugsweise mit einer Fadendichte von mehr als 20 Fäden/cm ausgerüstet ist. Das heißt, das Trägerband weist mehr als 20 Kettfäden/cm sowie mehr als 20 Schussfäden/cm auf. Außerdem hat es sich bewährt, wenn die längenbezogene Feinheit der Fäden, d.h. der Kettfäden und der Schussfäden, mehr als 1500 dtex/cm beträgt. Dadurch sind die Grundvoraussetzungen geschaffen, dass das solchermaßen hergestellte Klebeband mit dem betreffenden gewebten Träger über die notwendige Festigkeit für den beschriebenen Einsatzzweck verfügt. Zugleich sorgt die erfindungsgemäß vorgenommene gezielte Schwächung einzelner Fäden in dem gewebten Trägerband dafür, dass die gewünschte Handeinreißbarkeit insbesondere in Querrichtung beobachtet wird.

Bei den gezielt hinsichtlich ihrer Festigkeit geschwächten Fäden handelt es sich typischerweise um sämtliche Längsfäden, wohingegen die Querfäden des gewebten Trägerbandes keine Schwächung ihrer Festigkeit erfahren. Dadurch ist das solchermaßen realisierte Klebeband mit vergleichbarer Abriebbeständigkeit ausgerüstet, wie ein Klebeband mit gleich aufgebauten Fäden, die jeweils unbehandelt sind. Tatsächlich sorgen bei dem erfindungsgemäßen Klebeband primär die unbehandelten Querfäden für die gewünschten Abriebeigenschaften. Hierin sind die wesentlichen Vorteile zu sehen.

Die beschriebene Vorrichtung kann so aufgebaut sein, dass die Fäden ausgehend von der Vorratseinheit die Behandlungsvorrichtung und dann die Webeinheit sowie abschließend die Beschichtungseinheit passieren. Das kann gleichsam in einer Linie erfolgen. Es ist aber auch möglich, die einzelnen Bearbeitungsschritte praktisch diskontinuierlich vorzunehmen. Dann werden die Fäden beispielsweise nach Passieren der Behandlungsvorrichtung zunächst aufgewickelt und von dort aus einem getrennten Webprozess zugeführt. Auch die abschließende Beschichtung kann in einem separaten Herstellungsschritt vorgenommen werden.

## Patentansprüche

1. Handeinreißbares textiles Klebeband, mit einem zumindest einseitig mit einem Kleber beschichteten gewebten Trägerband, wobei das Trägerband aus Längsfäden und Querfäden aufgebaut ist,
**dadurch gekennzeichnet, dass**
- einzelne Fäden eine um 5 % bis 60 % verringerte Reißfestigkeit, entsprechend der DIN EN 14 410 bestimmt, aufweisen, welche durch eine dem Weben vorgeschaltete Behandlung mit einer Bearbeitungsflüssigkeit zur Reduzierung der Faserreißfestigkeit eingestellt worden ist, wobei
- sämtliche oder ausgewählte Längsfäden des Trägerbandes behandelt worden sind und die reduzierte Reißfestigkeit aufweisen, während
- es sich bei den Querfäden um unbehandelte Fäden mit demgegenüber unveränderter Reißfestigkeit handelt.

2. Klebeband nach Anspruch 1, **dadurch gekennzeichnet, dass** das Trägerband aus einem Polyestergewebe aufgebaut ist.

3. Klebeband nach Anspruch 1 oder 2, **dadurch gekennzeichnet, dass** das Trägerband mehr als 20 Kettfäden/cm sowie mehr als 20 Schussfäden/cm aufweist.

4. Klebeband nach einem der Ansprüche 1 bis 3, **dadurch gekennzeichnet, dass** die längenbezogene Feinheit der Kettfäden und der Schussfäden mehr als 1500 dtex/cm beträgt.

5. Klebeband nach einem der Ansprüche 1 bis 4, **dadurch gekennzeichnet, dass** die Kett- und Schussfäden als Polyesterfäden ausgebildet sind.

6. Vorrichtung zur Herstellung eines handeinreißbaren textilen Klebebandes nach einem der Ansprüche 1 bis 5, mit einer Vorratseinheit für Längs- und/oder Querfäden, ferner mit einer Behandlungsvorrichtung, in welcher die von der Vorratseinheit zugeführten Fäden mit einer die Fasern des jeweiligen Fadens angreifende Bearbeitungsflüssigkeit solange behandelt werden, bis ihre Reißfestigkeit, entsprechend der DIN EN 14 410 bestimmt, um 5 % bis 60 % verringert ist, weiter mit einer Webeinheit, in welcher die jeweils behandelten Fäden und/oder unbehandelten Fäden miteinander zu einem Trägerband verwebt werden, und mit einer abschließenden Beschichtungseinheit zur zumindest einseitigen Beschichtung des Trägerbandes mit einem Kleber, wobei sämtliche oder ausgewählte Längsfäden die als Alkalisierungseinheit ausgebildete Behandlungsvorrichtung durchlaufen, während die Querfäden unbehandelt sind.

7. Vorrichtung nach Anspruch 6, **dadurch gekennzeichnet, dass** die Alkalisierungseinheit mit einer Natronlauge vorgegebener Konzentration gefüllt ist.

8. Vorrichtung nach einem der Ansprüche 6 oder 7, **dadurch gekennzeichnet, dass** der Behandlungsvorrichtung eine Reinigungsstation vorgeschaltet ist.

9. Vorrichtung nach einem der Ansprüche 6 bis 8, **dadurch gekennzeichnet, dass** der Behandlungsvorrichtung eine Wascheinheit zum Waschen und Neutralisieren der behandelten Fäden nachgeschaltet ist.

## Claims

1. Manually tearable textile adhesive tape, having a woven carrier strip, at least one side of which is coated with an adhesive, wherein the carrier strip is constructed from longitudinal threads and transverse threads,
**characterized in that**
- individual threads have a tear resistance that is reduced by 5 % to 60 %, determined according to DIN EN 14 410, which has been adjusted by a treatment with a treatment fluid to reduce the tear resistance prior to the weaving, wherein
- all or selected longitudinal threads of the carrier strip have been treated and exhibit the reduced tear resistance, whereas
- the transverse threads are untreated threads with unchanged tear resistance in comparison therewith.

2. Adhesive tape according to Claim 1, **characterized in that** the carrier strip is constructed from a woven polyester fabric.

3. Adhesive tape according to Claim 1 or 2, **characterized in that** the carrier tape has more than 20 warp threads/cm and more than 20 weft threads/cm.

4. Adhesive tape according to any one of Claims 1 to 3, **characterized in that** the length-related fineness of the warp threads and the weft threads is more than 1500 dtex/cm.

5. Adhesive tape according to any one of Claims 1 to 4, **characterized in that** the warp and weft threads have the form of polyester threads.

6. Apparatus for producing a manually tearable textile adhesive tape according to any one of Claims 1 to 5, having a supply unit for longitudinal and/or transverse threads, further with a treatment apparatus in which the threads supplied by the supply unit are treated with a treatment fluid that acts on the fibres of the respective thread until the tear strength thereof, determined according to DIN EN 14 410, is reduced by 5 % to 60 %, further having a weaving unit in which the respectively treated threads and/or untreated threads are woven with each other to form a carrier tape, and with a final coating unit to coat at least one side of the carrier tape with an adhesive, wherein all or selected longitudinal threads pass through the treatment apparatus in the form of an alkalising unit, while the transverse threads are untreated.

7. Apparatus according to Claim 6, **characterized in that** the alkalising unit is filled with a caustic soda solution in a predetermined concentration.

8. Apparatus according to Claim 6 or 7, **characterized in that** the treatment apparatus is preceded by a purification station.

9. Apparatus according to any one of Claims 6 to 8, **characterized in that** the treatment apparatus is followed by a washing unit for washing and neutralising the treated threads.

## Revendications

1. Bande adhésive textile déchirable à la main avec au moins une bande de support tissée revêtue d'un côté d'un adhésif, sachant que la bande de support est constituée de fils longitudinaux et de fils transversaux,
**caractérisée en ce que**
- les fils individuels comportent une résistance à la déchirure réduite de 5 % à 60 %, déterminée selon la DIN NE 14 410, laquelle a été établie par un traitement mis en œuvre en amont du tissage avec un liquide de traitement destiné à réduire la résistance à la déchirure des fibres, sachant que
- tous les fils longitudinaux ou les fils longitudinaux sélectionnés de la bande de support ont été traités et présentent la résistance à la déchirure réduite, alors
- qu'il s'agit concernant les fils transversaux de fils non traités avec une résistance à la déchirure inchangée contrairement à ce qui précède.

2. Bande adhésive selon la revendication 1, **caractérisée en ce que** la bande de support est constituée d'un tissu en polyester.

3. Bande adhésive selon la revendication 1 ou 2, **caractérisée en ce que** la bande de support comporte plus de 20 fils de chaîne/cm ainsi que plus de 20 fils de trame/cm.

4. Bande adhésive selon l'une quelconque des revendications 1 à 3, **caractérisée en ce que** la finesse du point de vue longueur des fils de chaîne et des fils de trame représente plus de 1500 dtex/cm.

5. Bande adhésive selon l'une quelconque des revendications 1 à 4, **caractérisée en ce que** les fils de chaîne et de chaîne sont constitués sous la forme de fils de polyester.

6. Dispositif de fabrication d'une bande adhésive textile déchirable à la main selon l'une quelconque des revendications 1 à 5, avec une unité de réserve pour les fils longitudinaux et/ou transversaux, avec en plus un dispositif de traitement dans lequel les fils amenés par l'unité de réserve sont traités avec un liquide de traitement attaquant les fibres du fil respectif tant que leur résistance à la déchirure, déterminée selon la DIN EN 14 410, n'est pas réduite de 5 % à 60 %, avec en plus une unité de tissage dans laquelle les fils respectivement traités et/ou les fils non traités sont tissés ensemble en une bande de support et avec une unité de revêtement finale pour revêtir au moins d'un côté la bande de support avec un adhésif, sachant que tous les fils longitudinaux ou les fils longitudinaux sélectionnés traversent le dispositif de traitement constitué comme unité d'alcalinisation, alors que les fils transversaux ne sont pas traités.

7. Dispositif selon la revendication 6, **caractérisée en ce que** l'unité d'alcalinisation est remplie d'une solution de soude caustique d'une concentration prédéfinie.

8. Dispositif selon l'une quelconque des revendications 6 ou 7, **caractérisé en ce qu'**un poste de nettoyage est monté en amont du dispositif de traitement.

9. Dispositif selon l'une quelconque des revendications 6 à 8, **caractérisé en ce qu'**une unité de lavage destinée au lavage et à la neutralisation des fils traités est montée en aval du dispositif de traitement.
